# EUROPÄISCHE PATENTSCHRIFT

(11) **EP 2 796 186 B1**
(45) Veröffentlichungstag und Bekanntmachung des Hinweises auf die Patenterteilung: **07.08.2019**
(21) Anmeldenummer: 14176215.3
(22) Anmeldetag: 19.05.2010
(51) Int. Cl.: B01D 69/02, B01D 67/00, B01D 65/10, G01M 3/40

(54) **Membran mit Mitteln zur Zustandüberwachung**
Membrane with means for status monitoring
Membrane dotée de moyens de surveillance d'état

(30) Priorität: 27.05.2009 DE 102009022913
(43) Veröffentlichungstag der Anmeldung: 29.10.2014
(62) Teilanmeldung aus: 10722305.9
(73) Patentinhaber: Airbus Operations GmbH, 21129 Hamburg (DE)
(72) Erfinder: Friedberger, Alois, 85667 Oberpframmern (DE); Helwig, Andreas, 80469 München (DE); Müller, Gerhard, 85567 Grafing (DE)
(74) Vertreter: Bird & Bird LLP

(56) Entgegenhaltungen:
- EP-A2- 1 441 209
- WO-A1-2009/033226
- WO-A2-2005/105276
- DE-A1- 19 926 372
- US-A- 3 278 881
- US-B1- 6 541 676

## Beschreibung

Die Erfindung betrifft teildurchlässige Membran mit Löchern. Membran. Die Anwendung von undurchlässigen oder teildurchlässigen Membranen in der Technik sind vielfältig. Insbesondere teildurchlässige Membrane weisen häufig Löcher oder Durchbrüche mit einem bestimmten Durchmesser auf, um Stoffe mit geringerem Partikeldurchmesser passieren zu lassen aber Stoffe mit größerem Partikeldurchmesser zurückzuhalten. Derartige Membrane unterliegen vor allem an den Löchern einem Verschleiß, d.h. es bilden sich Risse, die von einem Loch ausgehend durch die Membran wachsen. Insbesondere bei mikromechanischen Membranen mit Löchern von geringem Durchmesser im Bereich 1 µm und kleiner ist die Erfassung des Zustands der Membran, insbesondere ob diese Risse aufweist, sehr schwierig. Membrane mit Rissen lassen dann unerwünschterweise auch solche Partikel passieren, die eigentlich zurückgehalten werden sollten. Gerade bei Anwendungen im medizinischen oder hygienischen Bereich kann es dann zur Beeinträchtigung der Funktion kommen. Beispielsweise bei einem Wasserfilter, der Bakterien mit einem Partikeldurchmesser von ca. 1 µm durch einen Lochdurchmesser von 450 nm zurückhalten sollte, würden diese bei einem Riss zwischen benachbarten Löchern passieren können. Aufgrund der geringen Strukturgröße ist es schwierig, derartige mikroskopische Risse festzustellen.

WO 2005/105276 A2 offenbart eine teildurchlässige Membran, auf die auf einer Seite zumindest eine stromdurchflossene Leiterbahnen aufgebracht ist. Der Zustand der Membran kann mittels der stromdurchflossenen Leiterbahn bestimmt werden.

US 6 541 676 B1 offenbart eine teildurchlässige Membran, auf die auf einer Seite zumindest eine stromdurchflossene Leiterbahn aufgebracht ist. Mittels der stromdurchflossenen Leiterbahn kann die Membran beheizt werden.

Aufgabe der Erfindung ist es daher, eine Membran bereitzustellen, deren Zustand feststellbar ist. Es sollen also insbesondere Risse oder andere funktionsbeeinträchtigende Schadstellen zuverlässig feststellbar sein.

Erfindungsgemäß wird diese Aufgabe durch die im Anspruch 1 angegebenen Merkmale gelöst. Vorteilhafte Weiterbildungen ergeben sich aus den Unteransprüchen.

Die Erfindung ermöglicht die Überwachung des Zustandes der Membran (also ob diese funktionsfähig bzw. intakt ist) durch Erfassung des elektrischen Stromes durch die mindestens eine Leiterbahn. Dazu ist die mindestens eine Membran zumindest an den besonders rissgefährdeten Bereichen oder aber über der gesamten Membranfläche mit einer oder mehreren Leiterbahnen bedeckt. Diese Leiterbahnen sind dazu sehr dünn und empfindlich gestaltet, damit diese sofort unterbrochen werden, wenn diese vom Riss erreicht werden.

Wenn sich ein Riss gebildet hat, wird dieser also ab einer gewissen Größe bzw. Erstreckung die Leiterbahn erreichen und durchtrennen. Damit fließt kein oder fast kein Strom mehr und eine Fehlermeldung kann ausgegeben werden. Der Zustand der Membran kann auch über ein Detektionssystem gemäß der DE 10 2004 030 380 A1 überwacht werden.

Vorzugsweise wird eine einzige Leiterbahn vorgesehen sein, welche mäander- oder schleifenartig die Membranoberfläche zumindest teilweise oder aber komplett bedeckt. Es kann eine gleichmäßige Beabstandung der einzelnen Leiterbahnschleifen vorgesehen werden oder eine engere Führung an gefährdeten Stellen. Es können auch mehrere elektrisch parallelgeschaltete Leiterbahnen vorgesehen sein. Außerhalb des Membranbereichs sind Kontakte vorgesehen, die mit der Leiterbahn kommunizieren und über die ein Detektionssystem mit der Leiterbahn elektrisch kontaktiert ist. Hierzu eignen sich insbesondere gefederte Kontaktstifte welche durch einen Dichtring, der über die Leiterbahn verläuft, vor dem flüssigen Medium geschützt sind.

Vorzugsweise hat die mindestens eine Leiterbahn eine Dicke von 10 - 1000 nm, vorzugsweise 20 - 100 nm. Damit ist sichergestellt, dass die Leiterbahn einer Rissfortbildung keinen wesentlichen Widerstand entgegensetzt, welche sonst zu einer Rissfortbildung entlang der (parallel zur) Leiterbahn führen könnte, wodurch ein Riss wachsen könnte, ohne dass dies erfasst wird.

Vorzugsweise hat die mindestens eine Leiterbahn eine Breite von 50 nm - 100 µm, vorzugsweise 100 nm - 500 nm. Damit ist eine Anordnung der Leiterbahn zwischen den häufig eng angeordneten Löchern in einer Membran möglich.

Vorzugsweise ist die mindestens eine Leiterbahn mit einer Passivierungsschicht versehen, vorzugsweise aus SiO₂, Si₃N₄, Diamant bzw. Diamant-ähnlichen Schichten, Polymeren wie Polycarbonat oder SiC. Damit ist sichergestellt, dass diese nicht vom Medium angegriffen wird, das die Membran umströmt, wodurch Fehlanzeigen vermieden werden.

Auf beiden Seiten der Membran ist mindestens eine Leiterbahn angeordnet. Dies ermöglicht entweder eine großzügigere Anordnung jeder der beiden Leiterbahnen ohne eine Beeinträchtigung der Überwachungsfunktion. Es ist dabei zweckmäßig, wenn die Leiterbahnen auf beiden Seiten mehr oder wenig quer zueinander verlaufen und auf diese Weise beispielsweise über zwei einfach zu fertigende Leiterbahnreihen, die jeweils aus parallelen Leiterbahnabschnitten bestehen, aber die Leiterbahnabschnitte beider Seiten senkrecht zueinander stehen, läßt sich ein engmaschiges Leiterbahnnetz bilden. Dies ist insbesondere von Vorteil, wenn regelmäßig angeordnete Löcher eng zu umschließen sind.

Alternativ kann eine Membran mit einer Anzahl Löcher auch mit einer Leiterbahn versehen sein, die sich schlangenlinien- oder wellenartig um die Löcher schmiegt.

Eine alternative Ausbildung sieht vor, dass bei einer Membran mit Löchern die Leiterbahn eine größere Breite aufweist als die Löcher. Die Fertigung einer solchen Membran wird am zweckmäßigsten dadurch erfolgen, dass zunächst die mindestens eine Leiterbahn auf der Membran vorgesehen wird und anschließend die Löcher ausgebildet werden. Dann kann die Löcheranordnung relativ willkürlich zum Verlauf der Leiterbahn erfolgen, da selbst die Anordnung von Löchern direkt in den Leiterbahnbereichen nicht zu einer Unterbrechung derselben führt. Alternativ können zuerst die Löcher und erst dann die Leiterbahn ausgebildet werden. Insbesondere bei kleinen Lochdurchmessern ist deren störender Einfluss auf weitere Herstellungsprozesse noch geringer und es ist möglich, auch noch nach der Ausbildung der Löcher die Leiterbahn aufzubringen und fotolithografisch oder anderweitig zu strukturieren.

Noch eine bevorzugte Weiterbildung der Erfindung sieht vor, dass die Membran aus einem Material besteht, das durch gezielte n- und/oder p-Dotierung (Grunddotierung) leitfähig machbar ist und die mindestens eine Leiterbahn als gezielte Dotierung (im Gegensatz zur Grunddotierung) der Membran an den Stellen gebildet ist, wo die mindestens eine Leiterbahn verlaufen soll. Geeignete Materialien sind insbesondere Halbleiter wie Silizium, Germanium, GaN, GaAlN, Diamant bzw. Diamant-ähnliche Schichten oder SiC.

Für die Herstellung einer erfindungsgemäßen Membran sind mehrere Verfahren möglich. Die drei notwendigen Schritte: (a) Membran herstellen, (b) Löcher fertigen, (c) Leiterbahnen aufbringen können in jeder beliebigen Reihenfolge nacheinander erfolgen aber besonders bevorzugt ist die Reihenfolge (c) (b) (a).

Die Erfindung wird anhand der beigefügten Zeichnungen weiter erläutert. Dabei zeigt:
- Fig. 1:: eine erste Ausführung einer Membran mit einer Leiterbahn;
- Fig. 2:: eine zweite Ausführung einer Membran mit einer Leiterbahn;
- Fig. 3:: einen Ausschnitt einer dritten Ausführung einer Membran mit einer Leiterbahn;
- Fig. 4:: eine vierte Ausführung einer Membran mit einer Leiterbahn;
- Fig. 5:: eine Ausführung einer Membran mit mehreren parallel geschalteten Leiterbahnen;
- Fig. 6:: eine Ausführung mit zwei quer zueinander laufenden Leiterbahnen;
- Fig. 7:: eine Ausführung mit einer durch Dotierung gebildeten Leiterbahn.

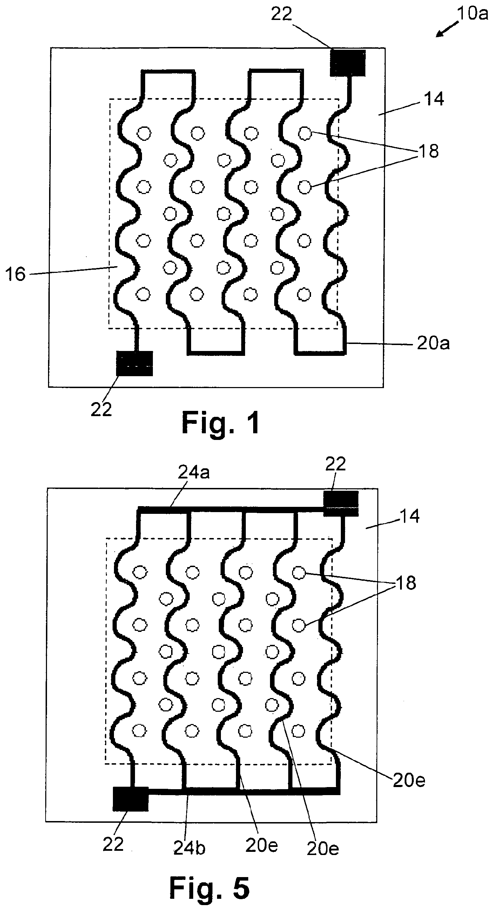

In den Figuren 1 bis 4 sind vier verschiedene Ausführungen von Membrananordnungen **10a** - **10d** dargestellt, die jeweils aus einer Leiterbahn **20a** - **20d** bestehen. Die Membrananordnungen umfassen bei diesen Ausführungsbeispielen jeweils einen Siliziumchip **14** von 5 x 5 mm aus einkristallinem Silizium mit einer Membrandicke von 1 µm. Durch die gestrichelten Rechtecke wird der eigentliche Membranbereich **16** definiert, in dem eine Anzahl Löcher **18** angeordnet sind. Die Löcher haben bei diesen bevorzugten Ausführungsbeispielen jeweils einen Durchmesser von etwa 450 nm. Es können auch kleinere oder deutlich größere Löcher vorgesehen werden.

Bei der Ausführung gemäß **Fig. 1** erstreckt sich eine Leiterbahn **20a** im wesentlichen über die gesamte Fläche des Membranbereichs **16** und zwar mäander- oder wellenartig in Anpassung an die Löcher **18**. Beidendig an der Leiterbahn **20a** sind Kontakte **22** vorgesehen, über die eine nicht gezeigte Detektoreinrichtung an die Leiterbahn **20a** anschließbar ist. Vorzugsweise misst diese Detektoreinrichtung den elektrischen Widerstand der Leiterbahn **20a**. Bei einer Rissbildung wird der Riss irgendwann die Leiterbahn **20a** erreichen und diese durchtrennen. Damit steigt der elektrische Widerstand der Leiterbahn **20a** an, was von der Detektoreinrichtung feststellbar ist. Diese kann beispielsweise ein Warnsignal erzeugen oder auch die mit der Membran versehene Vorrichtung außer Betrieb setzen.

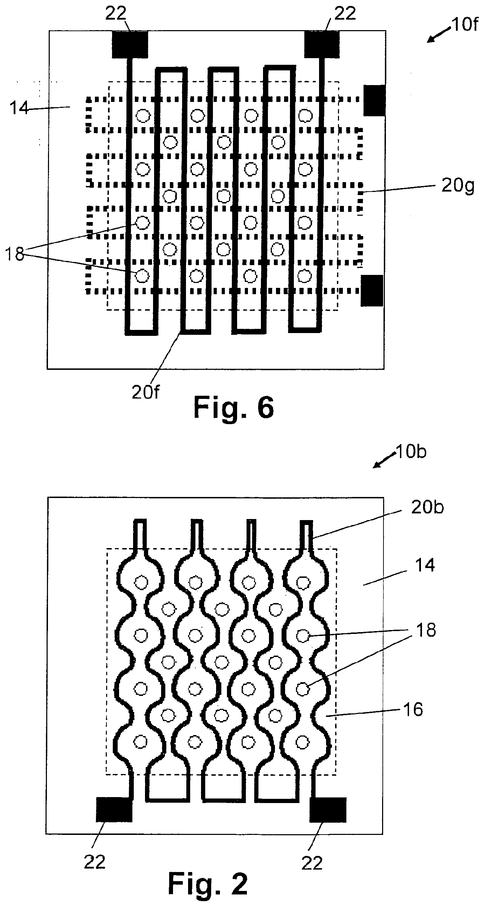

Die Ausführungsform gemäß **Fig. 2** ist der von Fig. 1 sehr ähnlich und unterscheidet sich von der Ausführungsform gemäß Fig. 1 nur dadurch, dass die Leiterbahn **20b** in engeren Schleifen verläuft und sich damit enger an die Löcher **18** anschmiegt, so dass bereits bei einsetzender Rissbildung, also zu einem früheren Zeitpunkt als bei der Ausführung gemäß Fig. 1, der Membranzustand als beschädigt feststellbar ist.

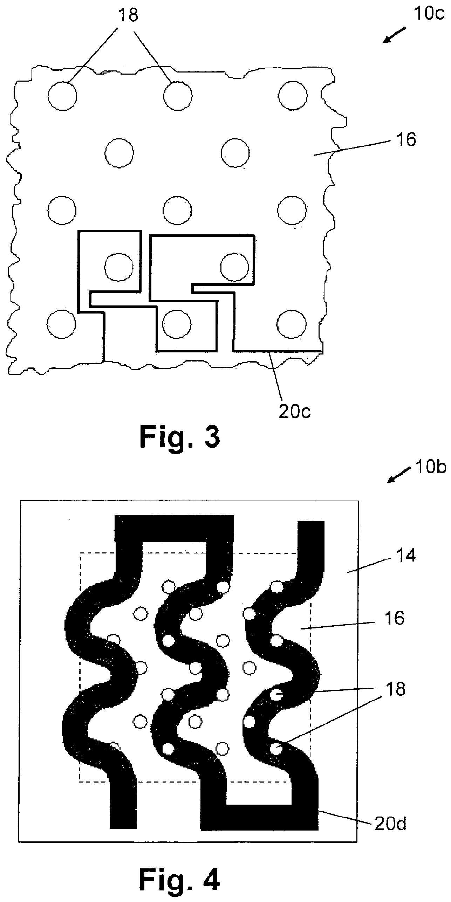

**Fig. 3** zeigt eine Ausführung **10c**, bei der die Leiterbahn **20c** so angeordnet ist, dass die Löcher **18** einzeln vollständig umschlossen werden, so dass eine Rissausbildung zwischen benachbarten Löchern **18** zwangsläufig zu einer Rissdetektion führt. Dabei ist ein relativ komplexer Verlauf der Leiterbahn **20c** erforderlich.

**Fig. 4** zeigt eine andere Ausführung **10d,** bei der die Leiterbahn **20d** eine deutlich größere Breite aufweist als die Durchmesser der Löcher **18**. Bei dieser Ausführung kann die Leiterbahn **20d** unabhängig von der Löcheranordnung **18** gewählt werden. Die Herstellung ist also einfacher, weil die Leiterbahn **20d** nicht genau an die Anordnung der Löcher **18** angepasst werden muss.

Die Herstellung kann vorzugsweise dadurch erfolgen, dass zunächst die Leiterbahn **20d** auf der Membran **16** aufgebracht wird und erst anschließend die Löcher **18** gefertigt werden. Denn selbst wenn einzelne Löcher **18** vollständig in die Leiterbahn **20d** fallen, bleibt diese leitfähig. Dabei sollte die Breite der Leiterbahn **20d** signifikant größer sein als der Durchmesser der Löcher **18**, vorzugsweise mindestens **150%** des Lochdurchmessers, damit bei der Fertigung nicht aus Versehen die Leiterbahn **20d** bereits unterbrochen wird. Die Leiterbahn **20d** wird vorzugsweise in engen Schleifen angeordnet sein, damit die nicht überdeckten Bereiche mit Löchern so klein wie möglich sind.

Die Ausführung gemäß **Fig. 5** entspricht im wesentlichen der von Fig. 1 mit dem Unterschied, dass mehrere schaltungstechnisch parallele Leiterbahnen **20e** vorgesehen sind, die zu Sammelleitungen **24a, 24b** führen, die mit den Kontakten **22** verbunden sind. Bei dieser Variante müssen die einzelnen Leiterbahnen **20e** einen vorgegebenen Leitungswiderstand aufweisen, denn als Fehler messbar ist nur die Änderung des Gesamtwiderstandes. Daher ist es zweckmäßig, wenn nicht zu viele parallele Leiterbahnen **20e** vorgesehen werden (vorzugsweise nicht mehr als etwa 5), weil dann die Erfassung einer Unterbrechung messtechnisch problematischer wird, denn der Widerstand ändert sich dann nur unwesentlich (Parallelschaltung von Widerständen), wenn eine der parallelen Leiterbahnen **20e** unterbrochen ist.

**Fig. 6** zeigt eine Ausführungsform **10f**, bei der die Löcher **18** von zwei Leiterbahnen **20f**, **20g** umgeben sind, wobei diese beiden Leiterbahnen **20f**, **20g** quer, vorzugsweise senkrecht, zueinander verlaufen und damit insbesondere jedes Loch **18** einzeln umschließen. Die beiden Leiterbahnen **20f**, **20g** können, wie in Fig. 6 dargestellt, separat beschaltet werden oder aber elektrisch in Reihe oder parallel geschaltet sein. Die beiden Leiterbahnen **20f**, **20g** können auf unterschiedlichen Seiten der Membran **14** angebracht sein oder aber auf der gleichen Seite und mittels einer dünnen elektrisch nichtleitenden Zwischenschicht voneinander getrennt sein.

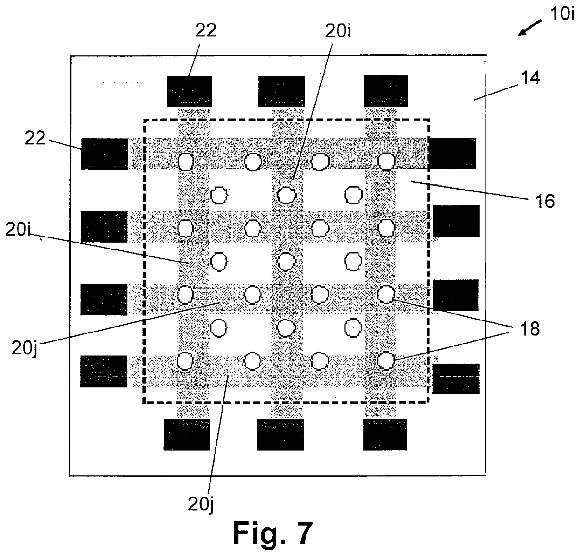

**Fig. 7** zeigt eine Ausführungsform **10i**, bei der in eine Membran aus einem Halbleiter wie Silizium, Diamant, SiC, GaN, GaAlN oder Germanium Bahnen **20i** und **20j** n- oder p-dotierter Halbleiter gebildet werden, die damit leitfähig sind und - wie in Fig. 7 gezeigt - einzeln kontaktiert sein oder aber ähnlich den Ausführungen gemäß der vorherigen Zeichnungen miteinander verbunden sein können. Bei der in Fig. 7 gezeigten Ausführung sind ähnlich wie bei Fig. 4, die Leiterbahnen **20i**, **20j** breiter als die Lochdurchmesser, was die Herstellung vereinfacht. Alternativ können die Leiterbahnen auch dünner ausgeführt und ähnlich der Fig. 1, 2, 3, 5 oder 6 angeordnet sein. Damit können n- und/oder p-leitfähige Bereiche erzeugt werden, die aufgrund von Raumladungszonen durch sperrende pn-Übergänge voneinander isoliert sind. Abhängig von der Breite der Leiterbahnen **20i**, **20j** kommt es entweder zu einem kompletten Verlust der Leitfähigkeit oder zu einem signifikanten Anstieg des Widerstandes. Die Leitfähigkeit der Leiterbahnen **20i**, **20j** kann durch geeignetes Dotieren variiert werden. Hierdurch kann die Sensitivität der Rissdetektion angepasst werden.

Außerdem stellt die Erfindung die folgenden Ausführungsformen bereit:
Ausführungsform 1: Membran, dadurch gekennzeichnet, dass diese mit mindestens einer stromdurchflossenen Leiterbahn (20) versehen ist, die bei Beschädigung der Membran unterbrechbar ist und der Zustand der Membran durch Erfassung des elektrischen Stromes durch die Leiterbahn bestimmbar ist.
Ausführungsform 2: Membran nach Ausführungsform 1, dadurch gekennzeichnet, dass die mindestens eine Leiterbahn (20) schleifenartig auf der Membran (14) angeordnet ist und diese im Wesentlichen abdeckt.
Ausführungsform 3: Membran nach Ausführungsform 1, dadurch gekennzeichnet, dass die mindestens eine Leiterbahn eine Dicke von 10 nm - 100 µm, vorzugsweise 20 nm - 500 nm aufweist.
Ausführungsform 4: Membran nach Ausführungsform 1, dadurch gekennzeichnet, dass die mindestens eine Leiterbahn eine Breite von 50 nm - 100 µm, vorzugsweise 100 nm - 500 nm aufweist.
Ausführungsform 5: Membran nach Ausführungsform 1, dadurch gekennzeichnet, dass die mindestens eine Leiterbahn mit einer Passivierungsschicht versehen ist.
Ausführungsform 6: Membran nach einer der vorherigen Ausführungsformen, dadurch gekennzeichnet, dass die mindestens eine Leiterbahn mäanderartig angeordnet ist.
Ausführungsform 7: Membran nach einer der vorherigen Ausführungsformen, durch gekennzeichnet, dass auf beiden Seiten der Membran mindestens eine Leiterbahn angeordnet ist.
Ausführungsform 8: Membran nach einer der vorherigen Ausführungsformen, dadurch gekennzeichnet, dass diese eine Anzahl Löcher aufweist und die mindestens eine Leiterbahn die Löcher zumindest weitgehend umschließt.
Ausführungsform 9: Membran nach Ausführungsform 7, dadurch gekennzeichnet, dass die mindestens eine Leiterbahn schlangenlinienartig zwischen den Löchern verläuft.
Ausführungsform 10: Membran nach einer der Ausführungsformen 1 bis 6, dadurch gekennzeichnet, dass diese eine Anzahl Löcher aufweist und die mindestens eine Leiterbahn eine größere Breite aufweist als die Löcher.
Ausführungsform 11: Membran nach Ausführungsform 1, dadurch gekennzeichnet, dass die Membran aus einem Material besteht, das durch gezielte n- oder p-Dotierung leitfähig machbar ist und die mindestens eine Leiterbahn als bereichsweise Dotierung der Membran gebildet ist.
Ausführungsform 12: Membran nach Ausführungsform 11, dadurch gekennzeichnet, dass die Membran aus Silizium, Germanium, GaN, GaAlN, Diamant, Diamant-ähnlichem Material oder SiC besteht.

Die Erfindung eignet sich insbesondere für Anwendungen zur Biosensorik oder Reinigung von Fluiden, ohne dass dies beschränkend wäre. Die Erfindung läßt sich auf sehr großflächige Strukturen anwenden, da hierfür geeignete Herstellungsverfahren wie Laserstrukturierung zur Verfügung stehen.

## Patentansprüche

1. Membran mit Löchern mit einem bestimmten Durchmesser, um Stoffe mit geringerem Partikeldurchmesser passieren zu lassen, aber Stoffe mit größerem Partikeldurchmesser zurückzuhalten, wobei die Membran mit mindestens einer stromdurchflossenen Leiterbahn (20) versehen ist, die bei Beschädigung der Membran unterbrechbar ist, wobei der Zustand der Membran durch Erfassung des elektrischen Stromes durch die Leiterbahn bestimmbar ist, **dadurch gekennzeichnet, dass** auf beiden Seiten der Membran mindestens eine Leiterbahn angeordnet ist.

2. Membran nach Anspruch 1, **dadurch gekennzeichnet, dass** die mindestens eine Leiterbahn (20) schleifenartig auf der Membran (14) angeordnet ist und diese im Wesentlichen abdeckt.

3. Membran nach Anspruch 1, **dadurch gekennzeichnet, dass** die mindestens eine Leiterbahn eine Dicke von 10 nm - 100 µm, vorzugsweise 20 nm - 500 nm aufweist.

4. Membran nach Anspruch 1, **dadurch gekennzeichnet, dass** die mindestens eine Leiterbahn eine Breite von 50 nm - 100 µm, vorzugsweise 100 nm - 500 nm aufweist.

5. Membran nach Anspruch l, **dadurch gekennzeichnet, dass** die mindestens eine Leiterbahn mit einer Passivierungsschicht versehen ist.

6. Membran nach einem der vorherigen Ansprüche, **dadurch gekennzeichnet, dass** die mindestens eine Leiterbahn mäanderartig angeordnet ist.

7. Membran nach einem der vorherigen Ansprüche, **dadurch gekennzeichnet, dass** die mindestens eine Leiterbahn die Löcher zumindest weitgehend umschließt.

8. Membran nach einem der vorherigen Ansprüche, **dadurch gekennzeichnet, dass** die mindestens eine Leiterbahn schlangenlinienartig zwischen den Löchern verläuft.

9. Membran nach einem der Ansprüche 1 bis 6, **dadurch gekennzeichnet, dass** die mindestens eine Leiterbahn eine größere Breite aufweist als die Löcher.

10. Membran nach Anspruch 1, **dadurch gekennzeichnet, dass** die Membran aus einem Material besteht, das durch gezielte n- oder p-Dotierung leitfähig machbar ist und die mindestens eine Leiterbahn als bereichsweise Dotierung der Membran gebildet ist.

11. Membran nach Anspruch 10, **dadurch gekennzeichnet, dass** die Membran aus Silizium, Germanium, GaN, GaAlN, Diamant, Diamant-ähnlichem Material oder SiC besteht.

## Claims

1. Membrane having holes having a specific diameter in order to allow substances having a smaller particle diameter to pass through, but to hold back substances having a larger particle diameter, wherein the membrane is provided with at least one conductor track (20) through which current flows and which can be interrupted upon damage to the membrane, wherein the state of the membrane can be determined by detecting the electric current through the conductor track, **characterized in that** at least one conductor track is arranged on both sides of the membrane.

2. Membrane according to Claim 1, **characterized in that** the at least one conductor track (20) is arranged in a loop-like manner on the membrane (14) and substantially covers the latter.

3. Membrane according to Claim 1, **characterized in that** the at least one conductor track has a thickness of 10 nm - 100 µm, preferably 20 nm - 500 nm.

4. Membrane according to Claim 1, **characterized in that** the at least one conductor track has a width of 50 nm - 100 µm, preferably 100 nm - 500 nm.

5. Membrane according to Claim 1, **characterized in that** the at least one conductor track is provided with a passivation layer.

6. Membrane according to any of the preceding claims, **characterized in that** the at least one conductor track is arranged in a meandering manner.

7. Membrane according to any of the preceding claims, **characterized in that** the at least one conductor track at least substantially encloses the holes.

8. Membrane according to any of the preceding claims, **characterized in that** the at least one conductor track runs like a wavy line between the holes.

9. Membrane according to any of Claims 1 to 6, **characterized in that** the at least one conductor track has a larger width than the holes.

10. Membrane according to Claim 1, **characterized in that** the membrane consists of a material which can be made conductive by targeted n- or p-type doping, and the at least one conductor track is formed as regional doping of the membrane.

11. Membrane according to Claim 10, **characterized in that** the membrane consists of silicon, germanium, GaN, GaAlN, diamond, diamond-like material or SiC.

## Revendications

1. Membrane avec des trous avec un certain diamètre pour laisser passer des matières avec un diamètre particulaire plus faible, mais retenir des matières avec un diamètre particulaire plus grand, la membrane étant dotée d'au moins une piste conductrice (20) traversée par du courant, qui peut être interrompue en cas d'endommagement de la membrane, l'état de la membrane pouvant être déterminé à travers la piste conductrice par la détection du courant électrique, **caractérisée en ce qu'**au moins une piste conductrice est disposée sur les deux côtés de la membrane.

2. Membrane selon la revendication 1, **caractérisée en ce que** l'au moins une piste conductrice (20) est disposée en forme de boucle sur la membrane (14) et recouvre celle-ci pour l'essentiel.

3. Membrane selon la revendication 1, **caractérisée en ce que** l'au moins une piste conductrice comporte une épaisseur de 10 nm - 100 µm, de préférence 20 nm - 500 nm.

4. Membrane selon la revendication 1, **caractérisée en ce que** l'au moins une piste conductrice comporte une largeur de 50 nm - 100 µm, de préférence 100 nm - 500 nm.

5. Membrane selon la revendication 1, **caractérisée en ce que** l'au moins une piste conductrice est dotée d'une couche de passivation.

6. Membrane selon l'une quelconque des revendications précédentes, **caractérisée en ce que** l'au moins une piste conductrice est disposée de façon méandreuse.

7. Membrane selon l'une quelconque des revendications précédentes, **caractérisée en ce que** l'au moins une piste conductrice entoure au moins largement les trous.

8. Membrane selon l'une quelconque des revendications précédentes, **caractérisée en ce que** l'au moins une piste conductrice passe sinueusement entre les trous.

9. Membrane selon l'une quelconque des revendications 1 à 6, **caractérisée en ce que** l'au moins une piste conductrice comporte une largeur plus grande que les trous.

10. Membrane selon la revendication 1, **caractérisée en ce que** la membrane est composée d'un matériau, qui peut être réalisé de manière conductrice par le dopage n ou p précis et l'au moins une piste conductrice est formée en tant que dopage par zone de la membrane.

11. Membrane selon la revendication 10, **caractérisée en ce que** la membrane est composée de silicium, de germanium, de GaN, de GaAlN, de diamant, de matériau analogue au diamant ou de SiC.
